# EUROPEAN PATENT SPECIFICATION

(11) **EP 1 068 732 B1**
(45) Date of publication and mention of the grant of the patent: **16.07.2003**
(21) Application number: 99914270.6
(22) Date of filing: 30.03.1999
(51) Int. Cl.: H04N 7/24

(54) **A PACKET PROTOCOL FOR ENCODING AND DECODING VIDEO DATA AND DATA FLOW SIGNALS**
PAKETPROTOKOLL ZUR KODIERUNG UND DEKODIERUNG VON VIDEODATEN UND DATENFLUSSSIGNALEN
PROTOCOLE A BASE DE PAQUETS, DESTINE AU CODAGE ET DECODAGE DE DONNEES VIDEO ET DE SIGNAUX DE FLUX DE DONNEES

(30) Priority: 03.04.1998 US 54864
(43) Date of publication of application: 17.01.2001
(73) Proprietor: AVID TECHNOLOGY, INC., Tewksbury, MA 01876 (US)
(72) Inventor: FRINK, Craig, R., Chelmsford, MA 01824 (US); HOAR, Andrew, V., Wilton, NH 03086 (US)
(74) Representative: Kazi, Ilya
(86) International application number: US9906866
(87) International publication number: WO99052290

(56) References cited:
- EP-A- 0 713 308
- EP-A- 0 833 514
- BURSKY D: "CHIP SET SIMPLIFIES HIGH-SPEED INTERCONNECTS. THE FIST ICS TO REALIZE THE P1394 SERIAL-BUS STANDARD LET DESIGNERS BUILD SERIAL CONNECTIONS RUNNING AT 100 TO 400 MBITS/S" ELECTRONIC DESIGN, vol. 42, no. 5, 7 March 1994, pages 114-117, XP000441329
- HOFFMAN G ET AL: "IEEE 1394: A UBIQUITOUS BUS" DIGEST OF PAPERS OF THE COMPUTER SOCIETY COMPUTER CONFERENCE (SPRING) COMPCON, TECHNOLOGIES FOR THE INFORMATION SUPERHIGHWAY SAN FRANCISCO, MAR. 5 - 9, 1995, no. CONF. 40, 5 March 1995, pages 334-338, XP000545446 INSTITUTE OF ELECTRICAL AND ELECTRONICS ENGINEERS
- HOFFMANN H: "STUDIO-INTERFACES FUR DIE PAKETIERTE UBERTRAGUNG VON BITRATENREDUZIERTEN VIDEOSIGNALEN" FERNSEH UND KINOTECHNIK, vol. 50, no. 6, 1 June 1996, pages 300-302, 304 - 30, XP000597276

## Description

### FIELD OF THE INVENTION

The present invention relates to packet-based protocols for transmitting data over interconnects. More particularly, the present invention is related to packet protocols for encoding and decoding video data and data flow control signals.

### BACKGROUND

Analog motion video signals, such as those used in common television sets, video tape recorders and other analog video systems, are temporally continuous and synchronous signals requiring various elements in a video system to be synchronized in order to be used. In other words, analog motion video signals have a predetermined and fixed rate to which all of the elements in the video system are synchronized. Any element in the video system is designed with the assumption that there will be a constant rate for input and output of motion video information.

More recently, it has been possible to store digital motion video data in data files on a computer. There are several methods for playing back such motion video data. One method is called "pushing" or "streaming" of the motion video data. Streaming is based on an assumption that a system can provide an average data flow rate that is the same as the ultimate data flow rate needed to ensure temporally continuous output of analog motion video images to a viewer. Sufficient buffering is used to account for expected latencies in data transfer between elements. In some cases, both the temporal and spatial resolution of the motion video information may need to be reduced. Such systems typically are designed with the assumption that transfer of audio and video data from a source through several processing elements to its ultimate destination can neither be delayed nor stopped.

When a general purpose digital computer is used to process motion video information, a constant rate of flow of data generally cannot be maintained. There may be variations in data flow rates due to various latencies in the computer system due to, for example, disk or memory read latency, interrupts from other processing elements in the computer, etc. In addition, in some systems, such as editing systems, the ability to stop and restart playback is desirable. In order to overcome such problems, one method which has been used is to provide sufficient buffering in combination with an ability for data transfer to be stalled, such as shown in U.S. Patent No. 5,045,940 (Peters, et al.). These principles are used in a computer network as described in published European Patent Application No. 0674414A2. An extension of this combination to special effects processing is disclosed in PCT Publications WO94/24815 and WO95/26100. In this system, a data decompressor outputs data into a first buffer, from which it is transferred to a second buffer associated with a special effects processor. The first buffer indicates whether valid data is available. In addition, the special effects processor indicates to a controller associated with the decompressor whether it can receive data based on memory in the second buffer.

One drawback of these systems is that they use a significant amount of buffering to accommodate for delays in data transfer between elements. They also generally are designed for use with a single predetermined format of media. Controlling data flow among interconnected devices also is described in U.S. Patent Application Serial No. 08/879,981, corresponding to WO-A-98/59494 published 30/12/1998. An interconnect may not have sufficient throughput or connectivity to provide data flow control information in parallel with data. A protocol for controlling data flow generally is dependent upon the transport medium of the interconnect.

### SUMMARY

A packet-based protocol includes data flow control signals for efficient transmission of data on various interconnects, including high speed parallel and serial interconnects. The packet protocol also enables routing of data in large systems or across standard video and computing networks. The packet protocol is data independent and permits sharing of different types of video data over a common interconnect and system design. The packet protocol also offers a flexible method for routing data between devices. Command data also may be sent between devices using this protocol. Using this packet protocol, any data storage or data processing device also may operate as a switch and may implement data flow control over its input and output interconnects. Flow controlled data transfer may be implemented using this protocol in a manner that is independent of the transport medium of the interconnect.

According to the invention there is provided a video processing system, video processing devices and a transceiver as set out in the claims.

It should be understood that other aspects of the invention include systems of devices interconnected by devices supporting the packet protocol, such as transceivers, packet switches and routers. Other aspects of the invention include methods for processing video data using this packet protocol, and the processes performed by video devices and transceivers in the other aspects of the invention.

### BRIEF DESCRIPTION OF THE DRAWING

In the drawing,
Fig. 1 is a diagram of the general structure of a packet in a packet protocol;
Fig. 2 is a diagram illustrating the structure of a header of a packet;
Fig. 3 is a diagram illustrating the structure of a packet descriptor;
Fig. 4 is a diagram illustrating the structure of an address ancillary header;
Fig. 5 is a illustration of a sample data packet;
Fig. 6 is a diagram of a sample request packet;
Fig. 7 is a diagram of a sample command packet;
Fig. 8 is a diagram of a sample interrupt packet;
Fig. 9 is a timing diagram illustrating transfer of a packet over a parallel interconnect;
Figs. 10A-C are a block diagrams of a transceiver interconnected with devices and providing inputs and outputs in accordance with this protocol;
Fig. 11 is a block diagram of a multisystem interconnect topology in which the packet protocol may be used to route video information among systems; and
Fig. 12 is a block diagram illustrating systems interconnected by video interconnects to communicate using the packet protocol.

### DETAILED DESCRIPTION

A packet protocol embeds data and flow control information in packets to permit such information to be conveyed over a variety of interconnects between data processing devices. A packet protocol also enables dynamic routing of information by embedding destination addresses in a packet. Other command data, such as memory addresses for a device or other data processing parameters, also may be embedded in a packet. A packet also permits data of varying precisions to be packed into a format that conforms to the data width of a transport medium.

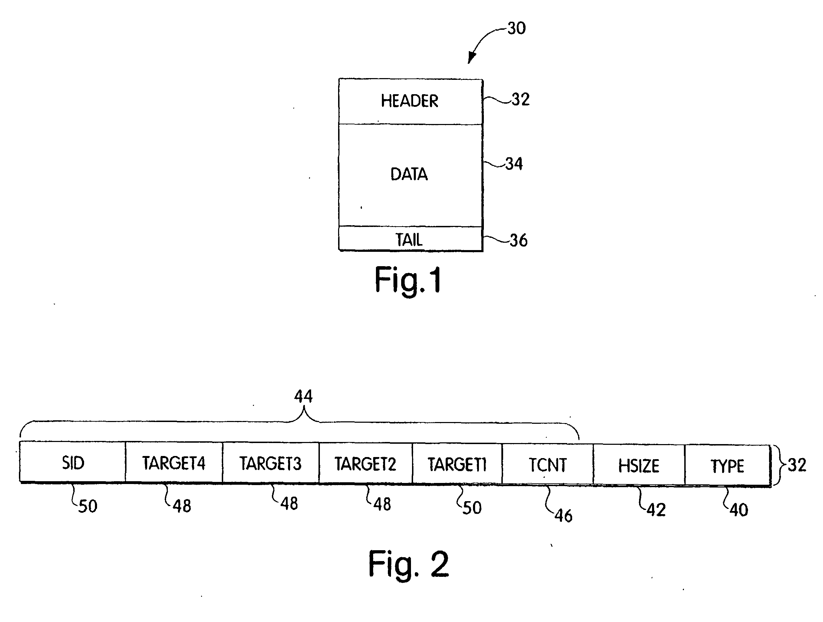

Referring now to Fig. 1, a general packet structure will now be described. A packet 30 has a header 32, a data portion 34 and a tail 36. The width and bits of the header, data and tail may be of any precision, although a byte-oriented precision simplifies processing by both video and computing devices. The header indicates a type of the packet and its destination. The data section carries data which may include command data, messages, video, audio, and other types of data. The tail indicates the end of a packet, and may include a check sum and possibly other control information. Because the use of the tail varies with the type of packet, the packet tails are described in connection with the types of packets.

Fig. 2 illustrates in more detail the data that may be included in a header in one embodiment. The header 32 includes a type field 40 which describes the type of the packet. There may be several types of packets in a system, such as a command packet, a request packet, a data packet and interrupt packets. Various types of packets are described in more detail below.

The header 32 also may have a size field 42 which indicates the size of the header of the packet. This field is used when the header is of a variable size. Fields 44 are used to indicate routing information for transmitting the packet through a hierarchical routing network. In some embodiments, this data may be merely a destination address. In one embodiment shown in Fig. 2, the routing information includes a target count field 46 which indicates the number of levels in an interconnect address hierarchy through which the packet is directed. This field refers to the number of target fields 48 which contain valid target addresses. The target fields 48 indicates a destination by indicating an output port on a switch that directs the data to the destination. A stream identifier (SID) field 50 indicates a data stream, which may correspond to a subdevice at the destination.

An example of how the target count field and target fields may be used will now be provided. A packet received by a switch device reads the target count field. If the target count field is zero, the data is at its destination and the stream identifier field is used to indicate any subdevice address. If the target count field is non-zero the device reads the first target field 48 to identify the output port to which the packet is directed. The values from the target fields are shifted to the adjacent target field. In particular, contents from the second target field are moved to the first target field. The contents from the third target field are moved to the second target field, etc. The next switching device then reads the target count field, and, if appropriate, the first target field to determine the output port to which the packet is directed. Ultimately the target fields are shifted and the target count field is decremented to zero, at which point, the SID field indicates the final destination of the data.

The header 32 also may include additional information through what is called herein an ancillary header. The ancillary header is included as part of the header and is identified by the header size field 42. The ancillary header also may include a type field that indicates the type of ancillary header. The types of ancillary headers that may be used include, but are not limited to, a packet descriptor, a low order address, a high order address and a read request length. The meaning of these types will now be described in more detail.

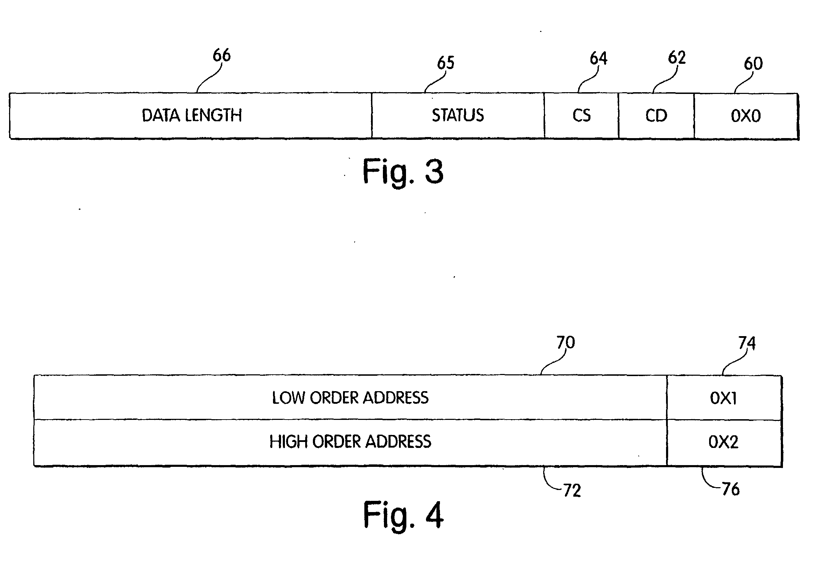

A packet descriptor type of ancillary header is shown in Fig. 3. It includes a type field 60 identifying the header as a packet descriptor, and a data size field 62 indicating the base size or precision of the data transport medium. For example, the base size may be 8, 10 or 12 bits. A component size field 64 indicates the number of bits per component or the precision of the component data. A component is a portion of the data being transferred, such as a luminance component of a pixel of video data. If the precision of the component differs from the precision of the transport medium, the data is packed in the packet into fractional and integer components in order to improve bandwidth and data storage utilization. A data length field 66 describes the length of the valid data in multiples of the data size.

A status field 65 also is provided. The status field 65 conveys information about the state of the video stream. The status information may include an indication that the packet ends with the last component of the data. In other words, the status field contains a boundary signal. The status field also may indicate whether the packet includes data of the last data segment in a requested sequence. For example, the value in this field may indicate the last frame of a requested video sequence. This signal is asserted when a frame advance counter (described in U.S. Patent Application Serial No. 08/879,981) has expired. The use of the frame advance counter in a packet-based system will be described in more detail below. The boundary signal is asserted for a single packet while the last frame signal is asserted for multiple packets.

An example ancillary header including addresses will now be described in connection with Fig. 4. As one example, the low order address ancillary header provides 28-bits of address information as indicated at 70. If more address space is used, a high order address ancillary header can be used as indicated at 72. By combining the high order and low order addresses, a larger memory size may be addressed, e.g., using 56-bits. The low order ancillary header has a type field 74; the high order address ancillary header also has a type field 76.

The read request length ancillary header has a structure similar to the low order address ancillary header and has a unique type field. This ancillary header is used in a read request packet, which is described in more detail below. This ancillary header indicates to the receiver of the packet how many bytes of data are requested by another device, i.e., the sender of the request packet.

Having described the packet header, the packet body will now be described. The packet data portion is generally used for command packets and data packets. These kinds of packets are described in more detail below. The packet data 34 (Fig. 1) may be of any length, but may be constrained by hardware limitations in a system. The data section generally is maintained at byte boundaries and data may be padded to meet this alignment restriction. Such alignment reduces complexity in data routing devices.

Different types of packets will now be described in more detail.

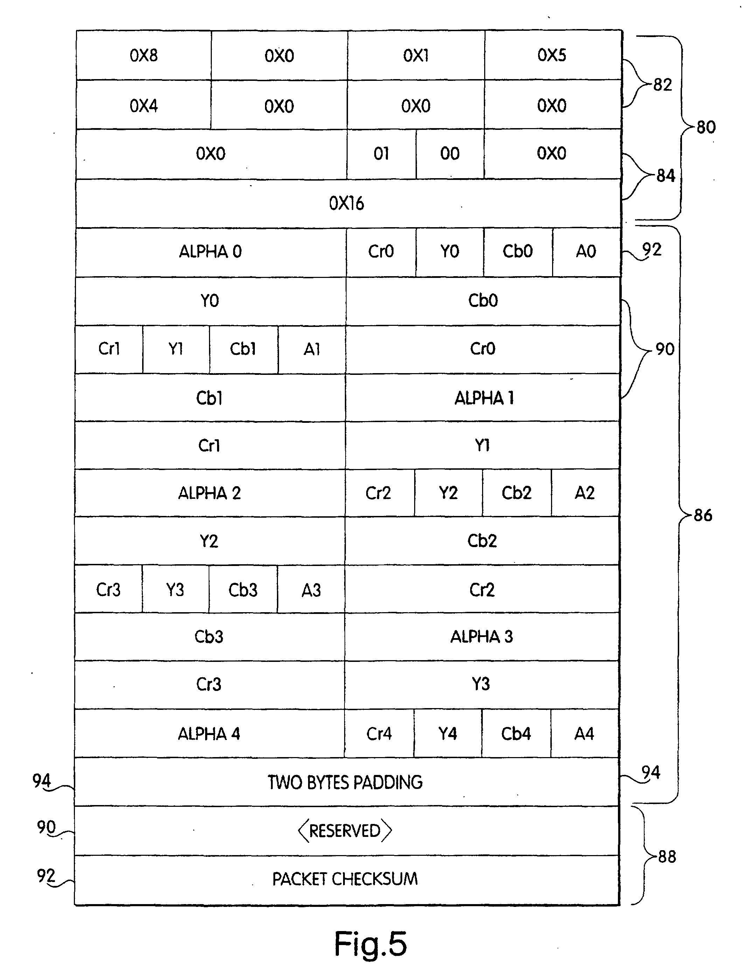

A sample data packet is shown in Fig. 5. This data packet includes a header 80 including a header 82 and ancillary header 84. Data is shown at 86. A packet tail is shown at 88. It should be understood that this sample packet has a short data portion 86 because it is an illustrative example. Packets in real systems will, in general, be much larger. The tail 88 includes reserved field 90 and a check sum field 92. The check sum value 92 in the tail 88 is computed by adding, as bytes, the header, the ancillary headers, the data and the reserved field of the tail.

The data field 86 includes packed data including integer portions 90 and fractional portions 92. Two bytes of padding are provided as indicated at 94. The data in the packet may include incomplete data if ordering is maintained between packets. In these packet formats, the data may be SMPTE-compliant or non-SMPTE-compliant. In SMPTE-compliant data, a data may not be 0x00 or 0xff. Accordingly, 8-bit data on a 10-bit interconnect has "01" prior to header and tail data and "00" following component and alpha data. Non-SMPTE-compliant data in a data portion of a packet is preceded by "01."

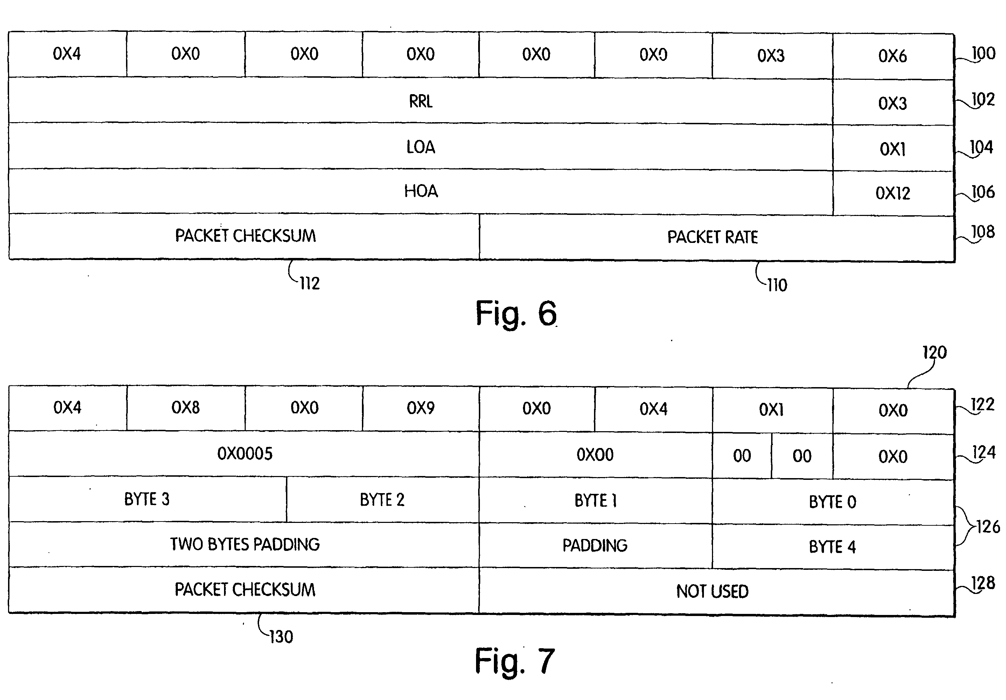

The flow of data packets from a sender to a receiver is controlled in a manner similar to the flow control mechanism found in U.S. Patent Application Serial No. 08/879,981. In other words, a sending device sends data in response to a request for data from the receiver. A request packet is used in the packet protocol to convey the request for data from the receiver. The request packet is a request for multiple packets that may start at a specified address. The request packet also may include data for use in controlling the rate at which the packets are sent. A sample request packet is shown in Fig. 6.

In Fig. 6, the request packet includes a header 100, as described above. The read request length ancillary header 102 identifies the number of bytes being requested. When a device includes memory address ancillary fields 104 and 106 may be used to request data from a known address at the device. A tail 108 of a request packet includes a packet rate field 110 and a packet check sum field 112. The check sum field 112 is a sum of all the. components of the packet. In systems where data is transferred at variable rates between senders and receivers, e.g., data flow systems, there is a possibility of saturating the interconnect by a single device. To address this problem, the packet rate field 110 is used to control the rate of data flowing between the devices that share an interconnect in order to arbitrate their use of the interconnect. A sender on the shared interconnect receives a request packet from a receiver specifying a packet rate for that sender. A sender has a counter which is initially loaded with the packet rate. This counter is decremented at the component rate of the system, such as 27 MHz for a standard definition television-based system. When the counter reaches a terminal count, a data packet is sent by the sender. The counter is reinitialized to the last packet rate value used unless a new request packet with a new packet rate value has been received. As an example, in a system using 128 component packets with a data rate of 27 MHz, the packet rate field may be set to a value of 128. The combination of the request packet and the data packet enables data flow to be controlled among devices. In a packet-based flow control mechanism, the request packet initiates the transfer of data from a sender, but this request is generally revocable. In contrast, on a hardware level flow control interconnect, the de-assertion of a request signal may terminate the ability for a sender to transmit data before any data is transmitted.

Another type of packet is a command packet, shown in Fig. 7. The command packet may be used to transmit command data through the system, other than data which is to be processed. The contents of a command packet may be transparent to or irrelevant to all devices except the receiving device. A command packet 120 has a header 122, ancillary header 124, command data 126 and a tail 128. The headers in the format as described above in connection with Fig. 2. A packet descriptor kind of ancillary header 124 is used to indicate the number of bytes of command data in the data portion 126. The packet tail 128 includes a check sum field 130. The check sum field may be at the same position and have the same precision in the different types of packets in order to simplify processing of types of packets by various devices. The precision of the checksum value is defined by the precisions of the transport medium.

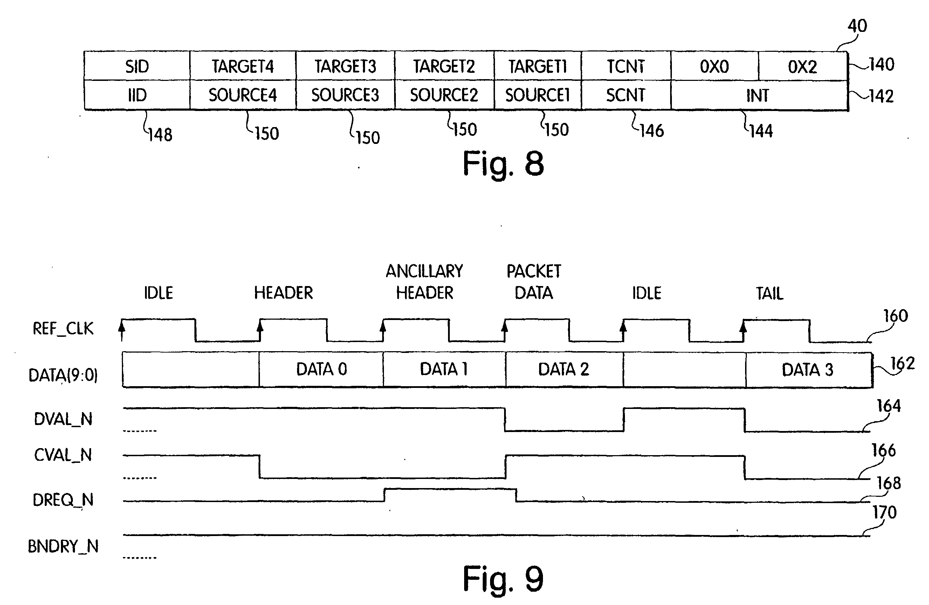

Another type of packet is an interrupt packet. Interrupt types include addressed and broadcast interrupts. Interrupt packets will now be described in connection with Fig. 8. An addressed interrupt packet is used to direct an interrupt at a specific device. Broadcast interrupt packets are system-defined global interrupts that are sent to all devices in a system. The type of interrupt packet is specified by the type field 40 and its header 140. The interrupt packet also includes a tail 142 and no data portion. The header directs the interrupt to the destination, just as it does with other types of packets. The tail has an interrupt field 144 that specifies an interrupt number. A return path to the source of the interrupt packet also is provided through a source count field 146, interrupt identifier 148 and source fields 150. The use of fields 146, 148 and 150 is identical to the use of fields 46, 48 and 50 of a packet header (see Fig. 2). Another difference between addressed interrupt packets and broadcast interrupt packets is the meaning of the interrupt value 144. An addressed interrupt has significance to the sender and receiver of the interrupt. The device receiving the interrupt identifies the type of the device at the return address and interprets the interrupt accordingly. Addressed interrupts generally are sent to devices that include processing elements capable of interpreting them. In contrast, any routing device in the system may be capable of recognizing a broadcast interrupt and transmitting it to all connected devices. The target address in the header is the address of the device that is to interrupt the host. A source return path is defined relative to the device addressed as the target. Sample broadcast type interrupts include an interrupt enable signal, halt, system reset, packet check sum and format errors, parity errors and resynchronization instructions. Other interrupts also may be defined.

The packet protocol so defined above, and variations thereof, may be transmitted over several kinds of interconnect, including component-based flow control interconnects time division multiplexed component-based interconnects, various computer interconnects including peripheral component interconnect (PCI), advanced graphics ports (AGP), fibre channel, IEEE-1394 fire wire interconnect, SMPTE-259M serial interface, SMPTE-291M serial interface, SMPTE-292M serial interface. A transceiver may be provided for each of these kinds of interfaces. A transceiver receives data from a processing element and produces a packet in accordance with the packet protocol. In the reverse direction, the packet protocol information is detected and removed and the data is provided to the processing device. The functions of various kinds of transceivers for processing packets in this protocol will now be described.

Referring now to Fig. 9, the signals of a component-based parallel interconnect are described. This interconnect includes a reference clock 160, data 162, an optional valid data signal 164, a valid command signal 166, a request signal 168, and a boundary signal 170. The meaning and use of these signals is described in more detail in U.S. Patent Application No. 08/879,981.

Using this interconnect, a transceiver encodes a packet by using the valid data signal 164 and valid command signal 166. These two signals, in combination, can designate four states which can indicate that the interconnect is idle and the presence of header, data and tail portions of the packet on the interconnect. In this embodiment, the low level interconnect may have its own flow control provided by the request signal, but the data flow between the receiver and sender also may be controlled by the request packets and data packets sent therebetween. For this purpose, duplex interconnects would be provided. In the example shown in Fig. 9, "data 0" and "data 1" are a header, "data 2" is packet data. "Data 3" is the packet tail. The remaining clock cycles would indicate invalid data on the data bus.

With the kind of encoding of a packet shown in Fig. 9, packets can be readily time division multiplexed over a signal interconnect. The time division multiplexing can be performed on a packet basis, i.e., having a channel for each packet.

In either interconnect, a boundary signal may be omitted from the interconnect because the packet includes an indication of any boundary of the data. Two packets also may be sent sequentially, rather than in an interlaced format over the interconnect.

In order to ensure the real-time functioning of a system using packets, the interface should be clocked at a rate that is faster than the bandwidth of an interface.

Packet data also may be transferred over standard computer and video interconnects instead of flow control based interconnects, as mentioned above. In packet-based interconnects, such as IEEE-1394 fire wire, fibre channel, or asynchronous transfer mode networks, packets in this packet protocol are simply data within packets of the network protocol being used. Other computer interconnects, such as a peripheral component interconnect (PCI) bus, advanced graphics port (AGP) bus or other bus, as well as local area networks which are not packet-based, the packets may be processed directly by the processing element sending and receiving the packets. A processing device associated with such an interface provides a new header including the routing information to send a processed video stream to its appropriate destination.

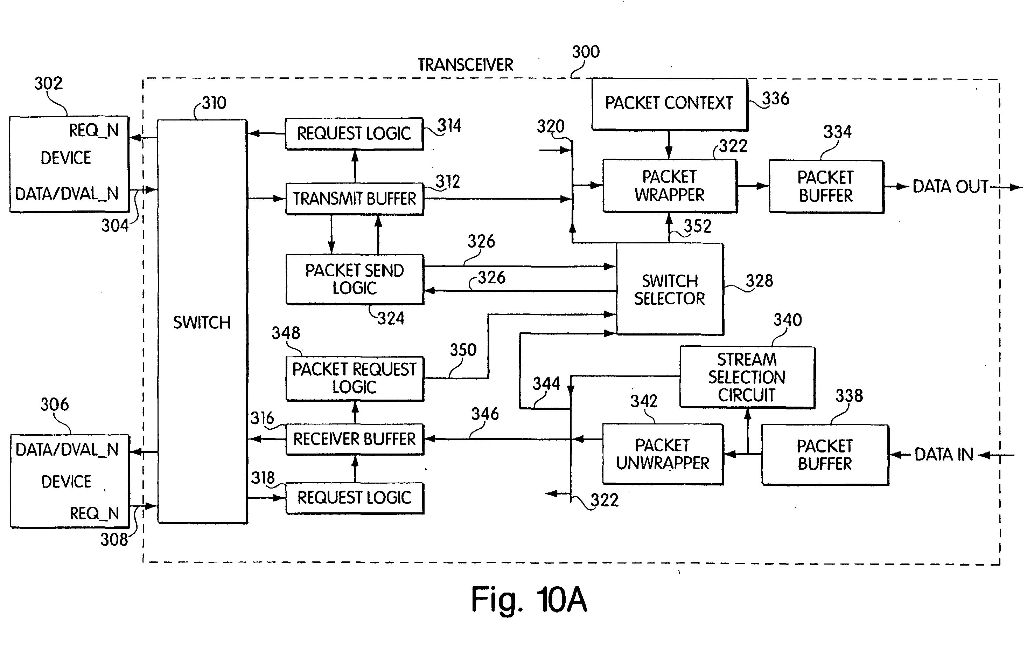

Fig. 10A illustrates a packet transceiver 300 which is connected to receive data from one or more devices 302. The connection at 304 may be direct data link over which data flow is controlled by a protocol. Transceiver 300 also is connected to one or more devices 306 through a similar port 308. Transceiver 300 sends data to devices 306. Ports 304 and 308 are connected through a dynamically configured switch 310, which may be configured using methods described above. Switch 310 may connect devices 302 either to devices 306 or to the transceiver 300. For each port of transceiver 300 that may receive data from a device 302, the transceiver 300 has a transmit buffer 312, which may be implemented as a FIFO. If the FIFO 312 is not full, a signal is generated by request logic 314, which issues a request signal to device 302. Similarly, transceiver 300 may send data to device 306 by sending data from a receive buffer 316, which may be implemented as a FIFO. A request signal from device 306 is processed by request logic 318 to issue a read command to the receive buffer 316. Other similar transmit buffers and receive buffers (not shown) corresponding to other similar devices are connected through respective switches 320 and 322.

The flow of data between devices 306 and 302 and the transceiver 300 is regulated by the state of the FIFOs 312 and 316. The transceiver 300 tries to maintain a constant flow of data between FIFOs 312 and 316 and devices 302 and 306 by issuing packet requests to another device, or by sending data in response to requests from other devices when data is available.

In order to transmit data from device 302 through transceiver 300, when data is available in buffer 312, a packet ready signal is sent to packet send logic 324. Packet send logic 324 provides a data ready signal 326 to switch selector 328. When data for this channel is authorized to be transmitted, the switch selector 328 sets the state of switch 320 and sends a send data signal 330 to the packet send logic 324. In turn, the packet send logic 324 instructs the FIFO 312 to read data which is transmitted to a packet wrapper 332. The packet wrapper forms the data into a packet and supplies it to a buffer 334 which outputs the packet. The packet buffer 334 may be a double buffer to overlap packet transmission with packet assembly. Each port, e.g. 304 and 308, has a unique stream identifier (SID) associated with it. Data and data requests are directed to the ports as identified by the SID. The SID also may be used to identify a packet context which is provided for each stream as indicated at 336. The packet context 336 is used in the construction of packet headers including target addressing, stream identifier, etc.

The transmission of data from a device 302 is performed in response to a request packet received by the transceiver 300. The packet is received in a buffer 338 that also may be implemented as a double buffer. The stream identifier in a packet is used by stream selection circuit 340 to select a device 306 using switch 322. The packet unwrapper 342 transforms the header and data portions of the packet into a request signal 344 or data 346. The request signal 344 is provided to the switch selector 328 in order to create a send data signal 330 to the indicated channel. When receiving data, packet request logic 348 generates a packet request 350 when the FIFO 316 is not full. The packet request signal 350 prompts the switch selector 328 to issue a send packet request 352 to the packet wrapper 332. The transceiver 300 also may be used to generate command packets in response to command data.

The rate at which the data is sent by transceiver 300 also may be controlled in response to a packet rate control value identified in a request for data. The packet rate control value may be provided through request signal 344 to the switch selector 328. The switch selector 328 includes a counter as described above which controls the rate at which packets are output by the packet wrapper 332.

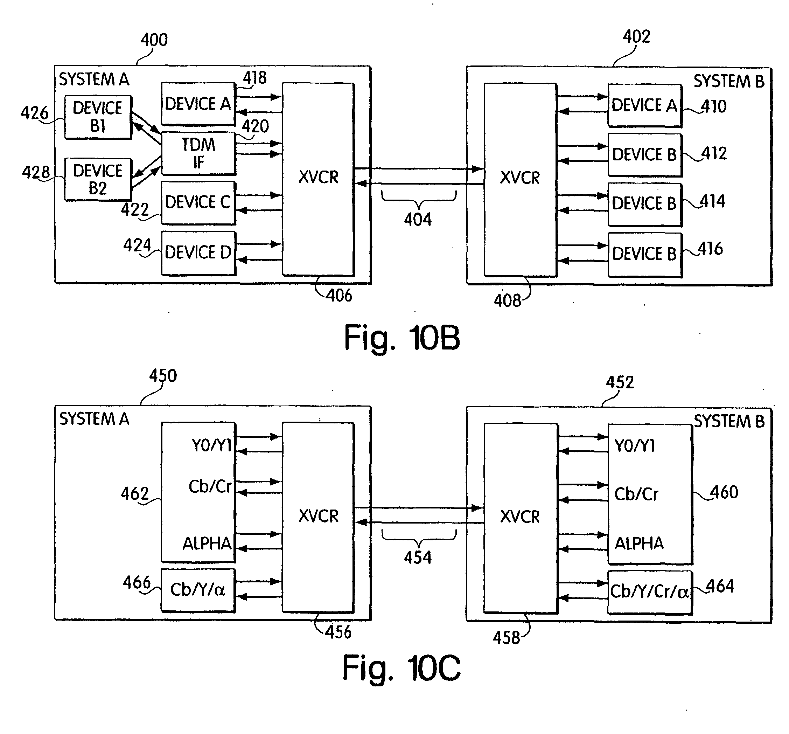

Fig. 10B illustrates an example interconnection of devices using transceivers such as transceiver 300 in Fig. 10A. In this example, system 400 is connected to system 402 through a packet protocol interconnect 404. Transceivers 406 and 408 provide a connection to the interconnect 404 and are implemented as shown in Fig. 10A. System 402 includes devices 410, 412, 414 and 416 which are connected to the transceiver 408 in the same manner that devices 302 and 306 are connected to transceiver 300 in Fig. 10A. Devices 418, 420, 422 and 424 similarly are connected to transceiver 406. Device 420 is a time division multiplexed interface that connects two devices 426 and 428 to the transceiver 406. Data streams in the system may be routed between devices using the transceivers 406 and 408 and even between devices within the same system because transceivers 406 and 408 include a dynamically configured switch 310 (Fig. 10A). In addition to providing switching among devices, this transceiver switch enables multiple stream copies to be created from a single stream of data.

Another example system is shown in Fig. 10C. In Fig. 10C, systems 450 and 452 are interconnected by a packet protocol interface 454. The connection is provided by transceivers 456 and 458 which are implemented using the transceiver shown in Fig. 10A. System 452 includes a first device 460 which uses three data channels connected to the transceiver 458. Such a device may be a high definition televisional (HDTV) device using 4:2:2 video and an alpha channel. A similar device 462 is found in system 450. Device 464 uses one channel and may provide a standard definition television signal (SDTV) defining 4:4:4:4 video and an alpha channel. A similar device 466 is shown in system 450. In this embodiment, the transceiver 456 combines multiple input streams, e.g. from devices 462 and 460 into a single high speed connection 454. The single stream of data from connection 454 is divided into multiple streams to the devices 460, 462, 464 and 466. This capability is useful when transferring data streams that operate at a rate above that of a single port.

In these embodiments, the combination of a FIFO buffer and flow control protocols for each port on the transceiver enables the transceiver to maintain maximum data throughput when connecting devices across a packet protocol interface, e.g., 454, and through the transceiver. The high throughput and efficient interconnect utilization is provided with a flexible routing method.

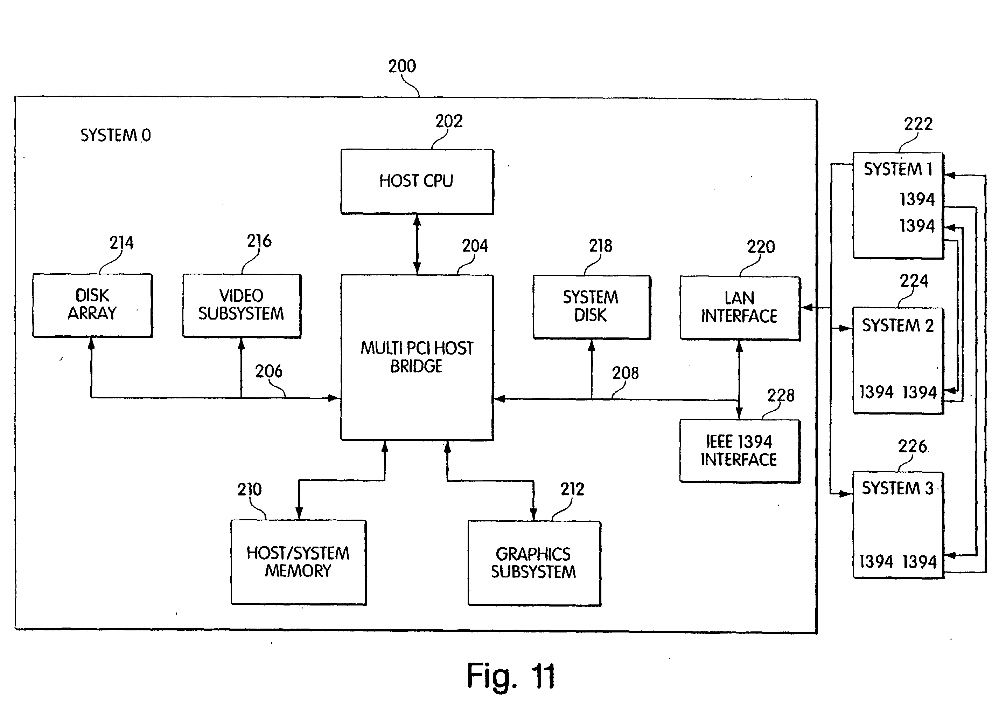

A benefit of this protocol will be illustrated in connection with Fig. 11. In Fig. 11, a first computer system 200 includes a host CPU 202, connected to a PCI host bridge 204 that is in turn connected to two PCI buses 206 and 208. The PCI bridge also connects the host CPU 202 to host and system memory 210 and a graphical subsystem 212 through an AGP bus. Connected to the first PCI bus 206 are a disk array 214 and video subsystem 216. A system disk 218 and LAN interface 220 also are connected to the second PCI bus 208. The LAN interface connects the system 200 to other computer systems 222, 224 and 226. The first computer system 200, has an IEEE-1394 interface 228 that connects to similar interfaces in system 224 and system 226. System 224 and 226 are connected to a similar interface on system 222. In this system, the computer system 222 is not directly connected to system 200 via a IEEE-1394 interface. However, using a packet protocol the computer system 200 can route data through its IEEE-1394 interface 228 to system 224 which in turn can send the data to system 222. System 222 may process the data and return the data to system 200 via system 226 or 224.

Accordingly, passing packets over various computer interconnects with this packet protocol allows routable video streams to be passed into and out of standard computer environments at high speeds. A video subsystem thus may have a consistent environment to interact with video applications run on the host processing and on other computers in the system. Thus, one computer in a multicomputer system can now be used as a video processing node in a much larger multisystem environment. For example, the routing information available in the packet may be used to direct video data to a specific process or hardware component in a distance processing node. A flow control channel among the components, for example, which may be provided by the LAN interfaces 220 permits such routing to be performed in asynchronous manner so that the temporal relationship between multiple streams can be maintained and controlled throughout a large system.

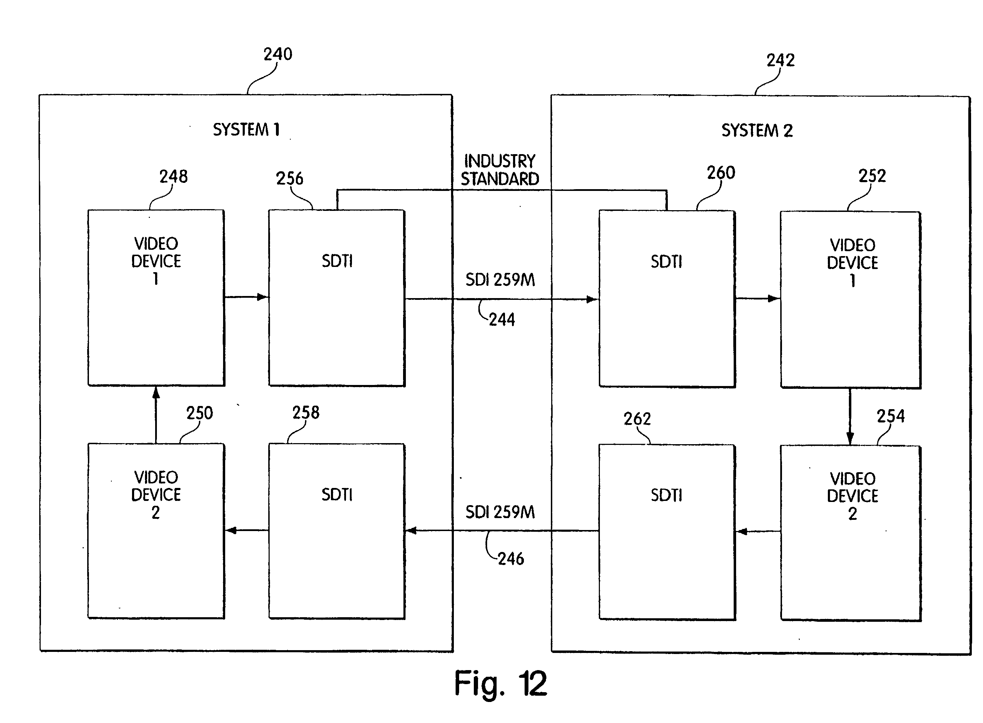

Data also may be transferred over standard video interconnects such as a SMPTE-259M serial interface or a SMPTE-292M serial interface. Other standard serial interfaces also may be used. For example, as shown in Fig. 12, a first system 240 may be connected to a second system 242 using video interconnects 244 and 246. These interconnects may provide data to video devices 248,250,252 and 254 via interfaces 256,258,260 and 262. Because these video interconnect standards may truncate data or search for marker codes, devices at either end of an interface may be modified to process packets before the stream is truncated or modified according to the standard. In these embodiments, the packets in this protocol may be embedded within the data format used by the standards. In particular, a frame of video data transferred over the serial interconnects is specified by SMPTE standard 125M-1995. Ancillary data fields are expected to comply with SMPTE standard 291M-1996. In these formats, there is a vertical ancillary data field, an optional vertical ancillary field, active video and horizontal ancillary data fields for each field of a frame of interlaced video. For continuous transport of video, the active video and ancillary data of this packet protocol are aligned in the active and ancillary portions of the serial digital interface protocol. For isochronous transport of packets, data may be placed in both the active video and ancillary data portions of a frame without regard to the type of data. Isochronous transfers also may be used to transport higher resolution data at non-real-time rates, such as for HDTV or film editing. Both interconnects are used to provide flow control, for example in order for system 242 to send request packets to system 240 and receive data packets from system 240.

When sending continuous data, the active video components are sent aligned both horizontally and vertically with the video frame. The video packets are one scanline or are included in 1440 components. The header for the video packet, for a given line, is the last data in the Horizontal Ancillary data field (HANC). The tail for the video packet is the first data in the HANC data field for the previous line as the video data. Smaller packets can be inserted between the tail for line n and the header for line n+1 in the same HANC data field. These packets may include either command data or true ancillary data. The header, tail and intervening packets may be in one 291M packet or multiple 291M packets may be used.

For example, the HANC portion of a scanline may include the packet tail for the packet sent in the previous scanline and the packet header for the current scanline. All of the HANC data field is occupied by a single SMPTE 291M packet.

The End of Active Video (EAV) and Start of Active Video (SAV) fields are as specified in SMPTE 294M, and include four code words: one word of all ones (0x3ff), two words of all zeros (0x000) and a code word including F, V, H, (Field, Vertical, Horizontal), P3, P2, P1, and P0 (parity bits). The ancillary data header is defined in SMPTE 125M, sections 3.6.1 and 3.6.2. It is defined as a three word header where the first word is all zeros and the next two are all ones. This header is used to alert detection circuitry to the presence of ancillary data.

The ancillary data packet protocol is defined in SMPTE 291M. The header includes three words. The top 8-bits (9:2) of each word define the header. The first word is the Data ID (DID). The DID is one of two types. Type 1 indicates that the next bytes should be interpreted as a Data Block Number (DBN). Type 2 indicates that the next word is an extension of the DID field. DIDs of 0x00 and 0x80 - 0xff are used to indicate type 1. 0x01 - 0x7f are used to indicate type 2. 0x00 is the undefined data identifier and may be used. The second word, for a type 1 header, is the DBN. The DBN is defined in section 3.9 of the 291M specification, and is a packet count that starts at zero for every field and is incremented when a packet of that DID is present. The DBN wraps if there are more than 255 packets in a frame. The third field is the Data Count (DC). It is a count of the number of components present in the ancillary data. Since the header is an 8-bit entity (with two parity bits in 10-bit applications), the maximum number of components in a packet is 255. The DC is defined in section 3.10 of the 291M specification.

291M packets are followed by a checksum. This checksum is defined in section 3.12 of the 291M specification. In the 10-bit applications, it is defined as a nine bit checksum of all of the components of the packet, including the header. Bits 8:0 contain the checksum and bit 9 is the inversion of bit 8. This inversion prevents the checksum from looking like a marker code.

SMPTE 125M specifies that all words not including ancillary data must be set to 0x040. This filler data may be placed either inside or outside of the ancillary data packets. At least ten components worth of SMPTE 125M filler data occur after the packet, since 291M packets have up to 255 components.

The HANC portion of a scanline may include a packet tail for the packet sent in a previous scanline and the packet header for a current scanline. The tail and header thus are in separate 291M packets. An ancillary data header is used before an ancillary packet header. Filler data may be placed inside the packets if so desired.

If there is real ancillary data or when command packets are sent over the link, smaller packets may be placed within the HANC field or larger ones may be placed within the VANC field. Examples of real ancillary data are audio and closed caption information.

A packet including ancillary or command data may be combined with the header and/or tail of a packet. Although the packet is shown in a separate ancillary data packet, the packet may be part of either the packet including the header or the tail.

Both SMPTE compliant and non-SMPTE compliant ancillary data packets may be sent in this fashion. Command packets are non-SMPTE compliant. Request packets and interrupt packets also may be sent over a 295M interconnect.

If the VANC fields are used for packet transmission, 291M ancillary data packets are no longer than 255 components. Packets also might not line up with 291M packets. Multiple packets or part of a single packet may be included in a 291M packet. The video system may select the packet length in these sections. A shorter packet is used for transmission during the HANC field in order to make it fit in between the tail for the previous line and the header for the current line. One 291M ancillary data packet also may be used, along with ten components of 0x400 filler data to allow for the transfer of four more components in the ancillary data or command packet.

A system may deviate from the video timing in the 259M interconnect, as long as both ends of the interconnect are cognizant of the different usage, in order to use lines 14 and 277 for data transmission. These lines are normally reserved for timing data that is used to synchronize the video stream. Since isochronous video is not sent to a true video device, there is no requirement for the transmission to be synchronized. For isochronous video, packets may be of any length, and are interrupted by EAV markers, SAV markers, ancillary data headers, ancillary data packet headers and ancillary data packet checksums. These markers are used to convert the data from serial to parallel formats.

Isochronous packets may be misaligned from the 291M fields. A packet may start prior to or after the beginning of a field. A packet may bridge the boundary between the active video and the HANC field. If the entire HANC field is to be used, at least two 291M ancillary data packets are used. Ten components of 0x040 may be used as filler, instead of having a second packet. This method reduces the amount of data transferred by three components.

The flow control mechanism for video interconnects, such as the 259M and 292M interconnects is the request packet. Flow control uses bi-directional communication. In other words, one link is used to send requests to a video source device and another link is used by the video source device to send video data. If two systems are used in a fashion where there is bi-directional video traffic, these two links also are used to transmit data. When flow control is done on a packet-by-packet basis, isochronous video transfers are used. When flow control is on a frame-by-frame basis, the transfer may be either of the continuous form of the isochronous form. If the continuous form is used, an entire frame time may be lost if data is not requested.

Because the packet protocol may be used to embed data and data flow control information over a variety of interconnects, and may include routing information and addressing information, various multisystem topologies may be used to perform video processing in a flow controlled manner. For example, in the system shown in Fig. 10, video output may be provided by system 200 which may be based on processing which is flow controlled through various video processing devices on systems 200,222,224 and 226. The packet protocol thus offers a flexible method for routing data between devices. Any data storage or data processing device also may operate as a switch and may implement data flow control over its input and output interconnects.

Having now described a few embodiments, it should be apparent to those skilled in the art that the foregoing is merely illustrative and not limiting, having been presented by way of example only. Numerous modifications and other embodiments are within the scope of one of ordinary skill in the art and are contemplated as falling within the scope of the invention.

## Claims

1. A video processing system, comprising:
a first video processing device comprising
an input for receiving request packets, wherein a request packet includes a stream identifier indicating a source of the data and an amount of data; and
an output for sending, in response to a request packet, data packets from the source of the data to a second video processing device when data is available from the source of data at the first video processing device according to the stream identifier and data up to the amount of data included in the request packet, wherein a data packet includes the stream identifier;
wherein the second video processing device comprises
an output for sending a request packet including the stream identifier and the amount of data to the first video processing device when the second video processing device has memory available for data for a stream; and
an input for receiving data packets from the first video processing device and for processing the data packet according to the stream identifier in the data packet; and
wherein the first video processing device and the second video processing device are connected by a communication medium to a packet switch having inputs for receiving packets and outputs for sending packets, wherein request packets from the second video processing device are routed to the first video processing device and wherein data packets from the first video processing device are routed to the second video processing device.

2. The video processing system of claim 1, wherein a data packet further includes a boundary signal portion containing a boundary signal indicative of an end of a data sample in the data packet.

3. The video processing system of claim 1, wherein the first video processing device includes means for permitting transfer of data through the output in an amount less than or equal to the amount of data indicated in the request packet and for holding data in an amount greater than the amount of data indicated in the request packet.

4. A video processing device comprising:
a memory;
an input for receiving request packets from another video processing device indicating the other video processing device is capable of receiving data, wherein a request packet includes a stream identifier indicating a source for reading data from the memory in the video processing device and an amount of data; and
an output for sending, in response to a request packet, data packets from the source to the other video processing device when data is available from the source, wherein a data packet includes a stream identifier for the other video processing device and data up to the amount of data.

5. The video processing device of claim 4, wherein a data packet further includes a boundary signal portion containing a boundary signal indicative of an end of a data sample in the data packet.

6. The video processing device of claim 4, further comprising:
means for permitting transfer of data through the output in an amount less than or equal to the amount of valid data indicated in the request packet and for holding data in an amount greater than the amount of valid data indicated in the request packet.

7. A video processing device comprising:
a memory;
an output for sending a request packet including a stream identifier indicating at least a portion of the memory to another video processing device and an amount of data when the video processing device has space available in the memory for data for a stream; and
an input for receiving data packets from the other video processing device and for processing the data packet according to the stream identifier in the data packet.

8. The video processing device of claim 7, wherein a data packet further includes a boundary signal portion containing a boundary signal indicative of an end of a data sample in the data packet.

9. The video processing device of claim 7, wherein a request packet includes a request signal portion containing a request signal from the other video processing device indicating a request for transfer of an amount of valid data.

10. A transceiver for processing video data and data flow control information using a packet protocol, comprising:
a transmit memory;
an input for receiving request packets from another video processing device indicating the other video processing device is capable of receiving data, wherein a request packet includes a stream identifier indicating a source for reading data from the transmit memory and an amount of data;
an output for sending, in response to a request packet, data packets from the source to the other video processing device when data is available from the source, wherein a data packet includes a stream identifier for the other video processing device and data up to the amount of data;
a receive memory;
an output for sending to another video processing device a request packet including a stream identifier indicating a channel for writing data to the receive memory and an amount of data, when the video processing device has space available in the receive memory for data for the channel; and
an input for receiving data packets from the other video processing device and for processing the data packet according to the stream identifier in the data packet to store the data in the receive memory.

11. The transceiver of claim 10, further comprising:
means for connecting a first device to the receive memory to read data from the receive memory, wherein the first device issues request signals to the transceiver and wherein the transceiver transfers data to the first device when data is available in the receive memory end in response to a request signal from the first device.

12. The transceiver of claim 11, further comprising:
means for connecting a second device to the transmit memory to write data into the transmit memory, wherein the transceiver issues request signals to the second device and wherein the second device transfers data to the transceiver when data is available in the second device and in response to the request signal from the transceiver.

13. The transceiver of claim 11, wherein the means for connecting the first device to the transceiver and the means for connecting the second device to the transceiver comprises a circuit switch interconnecting the first device, the second device and the transceiver

14. The transceiver of claim 10, further comprising:
means for connecting a second device to the transmit memory to write data into the transmit memory, wherein the transceiver issues request signals to the second device and wherein the second device transfers data to the transceiver when data is available in the second device and in response to the request signal from the transceiver.

## Patentansprüche

1. Videoverarbeitungssystem, das umfasst:
eine erste Videoverarbeitungsvorrichtung umfassend:
einen Eingang zum Empfangen von Anforderungspaketen, wobei ein Anforderungspaket einen Stromidentifizierer, der eine Quelle der Daten anzeigt, und einen Umfang an Daten enthält; und
einen Ausgang zum Senden, in Antwort auf ein Anforderungspaket, von Datenpaketen von der Quelle der Daten zu einer zweiten Videoverarbeitungsvorrichtung, wenn Daten von der Quelle der. Daten verfugbar sind, und zwar bei der ersten Videoverarbeitungsvorrichtung, und zwar gemäß dem Stromidentifizierer, und von Daten bis zu dem Umfang von Daten, der in dem Anforderungspaket enthalten ist, wobei ein Datenpaket den Stromidentifizierer enthält;
wobei die zweite Videoverarbeitungsvorrichtung aufweist;
einen Ausgang zum Senden eines Anforderungspakets, das den Stromidentifizierer und den Umfang an Daten enthält, zu der ersten Videoverarbeitungsvorrichtung, wenn die zweite Videoverarbeitungsvorrichtung einen Speicher hat, der für Daten für einen Strom verfügbar ist; und
einen Eingang zum Empfangen von Datenpaketen von der ersten Videoverarbeitungsvorrichtung und zum Verarbeiten des Datenpakets, und zwar gemäß dem Stromidentifizierer in dem Datenpaket; und
wobei die erste Videoverarbeitungsvorrichtung und die zweite Videoverarbeitungsvorrichtung durch ein Kommunikationsmedium mit einem Paketschalter verbunden sind, der Eingänge zum Empfangen von Paketen und Ausgänge zum Senden von Paketen hat, wobei Anforderungspakete von der zweiten Videoverarbeitungsvorrichtung zu der ersten Videoverarbeitungsvorrichtung geleitet werden und wobei Datenpakete von der ersten Videoverarbeitungsvorrichtung zu der zweiten Videoverarbeitungsvorrichtung geleitet werden.

2. Videoverarbeitungssystem nach Anspruch 1, bei welchem ein Datenpaket weiter einen Grenzsignalabschnitt enthält, der ein Grenzsignal enthält, das ein Ende eines Datenabtastwerts bzw. eines Datensatzes in dem Datenpaket anzeigt.

3. Videoverarbeitungssystem nach Anspruch 1, bei welchem die erste Videoverarbeitungsvorrichtung ein Mittel enthält, um eine Übertragung von. Daten durch den Ausgang in einem Umfang zu erlauben, der kleiner oder gleich dem Umfang von Daten ist, der in dem Anforderungspaket angezeigt wird, und um Daten in einem Umfang zu halten, der größer als der Umfang von Daten ist, der in dem Anforderungspaket angezeigt wird.

4. Videoverarbeitungsvorrichtung umfassend:
einen Speicher;
einen Eingang, um Anforderungspakete von einer anderen Videoverarbeitungsvorrichtung zu empfangen, wobei angezeigt wird, dass die andere Videoverarbeitungsvorrichtung dazu in der Lage ist, Daten zu empfangen, wobei ein Anforderungspaket einen Stromidentifizierer, der eine Quelle zum Lesen von Daten von dem Speicher in der Videoverarbeitungsvorrichtung anzeigt, und einen Umfang an Daten enthält; und
einen Ausgang zum Senden, in Antwort eines Anforderungspakets, von Datenpaketen von der Quelle zu der anderen Videoverarbeitungsvorrichtung, wenn Daten von der Quelle verfügbar sind, wobei ein Datenpaket einen Stromidentifizierer für die andere Videoverarbeitungsvorrichtung und Daten bis zu dem Umfang an Daten enthält.

5. Videoverarbeitungsvorrichtung nach Anspruch 4, bei welcher ein Datenpaket weiter einen Grenzsignalabschnitt enthält, der ein Grenzsignal enthält, das auf ein Ende eines Datenabtastwerts bzw. eines Datensatzes in dem Datenpaket hinweist.

6. Videoverarbeitungsvorrichtung nach Anspruch 4, die weiter folgendes umfasst:
ein Mittel, um eine Übertragung von Daten durch den Ausgang in einem Umfang zu erlauben, der weniger als oder gleich dem Umfang gültiger Daten ist, die in dem Anforderungspaket angezeigt werden, und um Daten in einem Umfang zu halten, der größer als der Umfang von gültigen Daten ist, die in dem Anforderungspaket angezeigt werden.

7. Videoverarbeitungsvorrichtung, die folgendes umfasst:
einen Speicher;
einen Ausgang zum Senden eines Anforderungspakets zu einer anderen Videoverarbeitungsvorrichtung, das einen Stromidentifizierer, der wenigstens einen Abschnitt des Speichers anzeigt, und einen Umfang an Daten enthält, wenn die Videoverarbeitungsvorrichtung Raum in dem Speicher für Daten für einen Strom zur Verfügung hat; und
einen Eingang zum Empfangen von Datenpaketen von der anderen Videoverarbeitungsvorrichtung und zum Verarbeiten der Datenpakete gemäß dem Stromidentifizierer in dem Datenpaket.

8. Videoverarbeitungsvorrichtung nach Anspruch 7, bei welcher ein Datenpaket weiter einen Grenzsignalabschnitt enthält, das ein Grenzsignal enthält, das auf ein Ende eines Datenabtastwerts bzw. eines Datensatzes in dem Datenpaket hinweist.

9. Videoverarbeitungsvorrichtung nach Anspruch 7, bei welcher ein Anforderungspaket einen Anforderungssignalabschnitt enthält, der ein Anforderungssignal von der anderen Videoverarbeitungsvorrichtung enthält, die einen Anforderung zur Übertragung eines Umfangs gültiger Daten enthält.

10. Sende-Empfangs-Gerät zum Übertragen von Videodaten und einer Datenfluss-Steuerinformation, die ein Paketprotokoll verwendet, wobei der Sender folgendes umfasst:
einen Übertragungsspeicher;
einen Eingang zum Empfangen von Anforderungspaketen von einer anderen Videoverarbeitungsvorrichtung, wobei angezeigt wird, das die andere Videoverarbeitungsvorrichtung dazu in der Lage ist, Daten zu empfangen, wobei ein Anforderungspaket einen Stromidentifizierer, der eine Quelle zum Lesen von Daten von dem Übertragungsspeicher anzeigt, und einen Umfang an Daten enthält;
einen Ausgang zum Senden, in Antwort auf ein Anforderungspaket, von Datenpaketen von der Quelle zu der anderen Videoverarbeitungsvorrichtung, wenn Daten von der Quelle verfügbar sind, wobei ein Datenpaket einen Stromidentifizierer für die andere Videoverarbeitungsvorrichtung und Daten bis zu dem Umfang an Daten enthält;
einen Empfangsspeicher;
einen Ausgang zum Senden eines Anforderungspakets zu einer anderen Videoverarbeitungsvorrichtung, das einen Stromidentifizierer, der einen Kanal zum Schreiben von Daten zu dem Empfangsspeicher anzeigt, und einen Umfang an Daten enthält, wenn die Videoverarbeitungsvorrichtung Raum in dem Empfangsspeicher für Daten für den Kanal zur Verfügung hat; und
einen Eingang zum Empfangen von Datenpaketen von der anderen Videoverarbeitungsvorrichtung und zum Verarbeiten des Datenpakets gemäß dem Stromidentifizierer in dem Datenpaket, um die Daten in dem Empfangsspeicher zu speichern.

11. Sende-Empfangs-Gerät nach Anspruch 10, das weiter folgendes umfasst:
ein Mittel zum Verbinden einer ersten Vorrichtung mit dem Empfangsspeicher, um Daten von dem Empfangsspeicher zu lesen, wobei die erste Vorrichtung Anforderungssignale an das Sende-Empfangs-Gerät abgibt, und wobei das Sende-Empfangs-Gerät Daten zu der ersten Vorrichtung übertragt, wenn Daten in dem Empfangsspeicher verfügbar sind, und in Antwort auf ein Anforderungssignal von der ersten Vorrichtung.

12. Sende-Empfangs-Gerät nach Anspruch 11, das weiter folgendes umfasst:
ein Mittel zum Verbinden einer zweiten Vorrichtung mit dem Sendespeicher, um Daten in den Sendespeicher zu schreiben, wobei das Sende-Empfangs-Gerät Anforderungssignale zu der zweiten Vorrichtung ausgibt und wobei die zweite Vorrichtung Daten zu dem Sende-Empfangs-Gerät überträgt, wenn Daten in der zweiten Vorrichtung verfügbar sind, und in Antwort auf das Anforderungssignal von dem Sende-Empfangs-Gerät.

13. Sende-Empfangs-Gerät nach Anspruch 11, bei welchem das Mittel zum Verbinden der ersten Vorrichtung mit dem Sende-Empfangs-Gerät und das Mittel zum Verbinden der zweiten Vorrichtung mit dem Sende-Empfangs-Gerät einen Durchschaltevermittler umfasst, der die erste Vorrichtung, die zweite Vorrichtung und das Sende-Empfangs-Gerät verbindet.

14. Sende-Empfangs-Gerät nach Anspruch 10, das weiter folgendes umfasst:
ein Mittel zum Verbinden einer zweiten Vorrichtung mit dem Sendespeicher, um Daten in den Sendespeicher zu schreiben, wobei das Sende-Empfangs-Gerät Anforderungssignale an die zweite Vorrichtung abgibt und wobei die zweite Vorrichtung Daten zu dem Sende-Empfangs-Gerät übertragt, wenn Daten in der zweiten Vorrichtung verfügbar sind, und in Antwort auf das Anforderungssignal von dem Sende-Empfangs-Gerät.

## Revendications

1. Un système de traitement vidéo, comprenant :
un premier dispositif de traitement vidéo comprenant
une entrée pour recevoir des paquets de requête, un paquet de requête incluant un identificateur de flux indiquant une source des données et une quantité de données; et
une sortie pour envoyer des paquets de données à partir de la source des données vers un second dispositif de traitement vidéo, en réponse à un paquet de requête, lorsque des données sont disponibles à partir de la source de données au premier dispositif de traitement vidéo, conformément à l'identificateur de flux, et des données jusqu'à la quantité de données incluse dans le paquet de requête, un paquet de données incluant l'identificateur de flux;
dans lequel le second dispositif de traitement vidéo comprend
une sortie pour envoyer au premier dispositif de traitement vidéo un paquet de requête incluant l'identificateur de flux et la quantité de données, lorsque le second dispositif de traitement vidéo a une mémoire disponible pour des données pour un flux; et
une entrée pour recevoir des paquets provenant du premier dispositif de traitement vidéo et pour traiter le paquet de données conformément à l'identificateur de flux dans le paquet de données; et
dans lequel le premier dispositif de traitement vidéo et le second dispositif de traitement vidéo sont connectés par un support de communication à un commutateur de paquets ayant des entrées pour recevoir des paquets et des sorties pour envoyer des paquets, des paquets de requête provenant du second dispositif de traitement vidéo étant acheminés vers le premier dispositif de traitement vidéo, et des paquets de données provenant du premier dispositif de traitement vidéo étant acheminés vers le second dispositif de traitement vidéo.

2. Le système de traitement vidéo de la revendication 1, dans lequel un paquet de données comprend en outre une partie de signal de limite contenant un signal de limite indiquant une fin d'un échantillon de données dans le paquet de données.

3. Le système de traitement vidéo de la revendication 1, dans lequel le premier dispositif de traitement vidéo comprend un moyen pour permettre un transfert de données par l'intermédiaire de la sortie, en une quantité inférieure ou égale à la quantité de données indiquée dans le paquet de requête, et pour conserver des données en une quantité supérieure à la quantité de données indiquée par le paquet de requête.

4. Un dispositif de traitement vidéo comprenant :
une mémoire;
une entrée pour recevoir des paquets de requête provenant d'un autre dispositif de traitement vidéo, indiquant que l'autre dispositif de traitement vidéo est capable de recevoir des données, le paquet de requête incluant un identificateur de flux indiquant une source pour lire des données dans la mémoire dans le dispositif de traitement vidéo, et une quantité de données; et
une sortie pour envoyer à l'autre dispositif de traitement vidéo, en réponse à un paquet de requête, des paquets de données provenant de la source, lorsque des données sont disponibles dans la source, un paquet de données incluant un identificateur de flux pour l'autre dispositif de traitement vidéo et des données jusqu'à la quantité de données.

5. Le dispositif de traitement vidéo de la revendication 4, dans lequel un paquet de données comprend en outre une partie de signal de limite contenant un signal de limite indiquant une fin d'un échantillon de données dans le paquet de données.

6. Le dispositif de traitement vidéo de la revendication 4, comprenant en outre :
un moyen pour permettre un transfert de données par l'intermédiaire de la sortie, en une quantité inférieure ou égale à la quantité de données valides indiquée dans le paquet de requête, et pour conserver des données en une quantité supérieure à la quantité de données valides indiquée dans le paquet de requête.

7. Un dispositif de traitement vidéo comprenant :
une mémoire;
une sortie pour envoyer à un autre dispositif de traitement vidéo un paquet de requête incluant un identificateur de flux indiquant au moins une partie de la mémoire et une quantité de données, lorsque le dispositif de traitement vidéo a de l'espace disponible dans la mémoire pour des données pour un flux; et
une entrée pour recevoir des paquets de données provenant de l'autre dispositif de traitement vidéo et pour traiter le paquet de données conformément à l'identificateur de flux dans le paquet de données.

8. Le dispositif de traitement vidéo de la revendication 7, dans lequel un paquet de données comprend en outre une partie de signal de limite contenant un signal de limite qui indique une fin d'un échantillon de données dans le paquet de données.

9. Le dispositif de traitement vidéo de la revendication 7, dans lequel un paquet de requête comprend une partie de signal de requête contenant un signal de requête provenant de l'autre dispositif de traitement vidéo, indiquant une demande de transfert d'une quantité de données valides.

10. Un émetteur-récepteur pour traiter des données vidéo et une information de contrôle de flux de données utilisant un protocole de paquets, comprenant
une mémoire d'émission;
une entrée pour recevoir des paquets de requête provenant d'un autre dispositif de traitement vidéo, indiquant que l'autre dispositif de traitement vidéo est capable de recevoir des données, un paquet de requête incluant un identificateur de flux indiquant une source pour lire des données dans la mémoire d'émission, et une quantité de données;
une sortie pour envoyer des paquets de données de la source vers l'autre dispositif de traitement vidéo, en réponse à un paquet de requête, lorsque des données sont disponibles à partir de la source, un paquet de données incluant un identificateur de flux pour l'autre dispositif de traitement vidéo et des données jusqu'à la quantité de données;
une mémoire de réception;
une sortie pour envoyer à l'autre dispositif de traitement vidéo un paquet de requête incluant un identificateur de flux indiquant un canal pour écrire des données dans la mémoire de réception et une quantité de données, lorsque le dispositif de traitement vidéo a de l'espace disponible dans la mémoire de réception pour des données pour le canal; et
une entrée pour recevoir des paquets de données provenant de l'autre dispositif de traitement vidéo et pour traiter le paquet de données conformément à l'identificateur de flux dans le paquet de données, pour stocker les données dans la mémoire de réception.

11. L'émetteur-récepteur de la revendication 10, comprenant en outre :
un moyen pour connecter un premier dispositif à la mémoire de réception pour lire des données dans la mémoire de réception, le premier dispositif émettant des signaux de requête vers l'émetteur-récepteur, et l'émetteur-récepteur transférant des données vers le premier dispositif lorsque des données sont disponibles dans la mémoire de réception, et en réponse à un signal de requête provenant du premier dispositif.

12. L'émetteur-récepteur de la revendication 11, comprenant en outre :
un moyen pour connecter un second dispositif à la mémoire d'émission, pour écrire des données dans la mémoire d'émission, l'émetteur-récepteur émettant des signaux de requête vers le second dispositif, et le second dispositif transférant des données vers l'émetteur-récepteur lorsque des données sont disponibles dans le second dispositif, et en réponse au signal de requête provenant de l'émetteur-récepteur.

13. L'émetteur-récepteur de la revendication 11, dans lequel le moyen pour connecter le premier dispositif à l'émetteur-récepteur et le moyen pour connecter le second dispositif à l'émetteur-récepteur comprennent un commutateur de circuits interconnectant le premier dispositif, le second dispositif et l'émetteur-récepteur.

14. L'émetteur-récepteur de la revendication 10, comprenant en outre :
un moyen pour connecter un second dispositif à la mémoire d'émission, pour écrire des données dans la mémoire d'émission, l'émetteur-récepteur émettant des signaux de requête vers le second dispositif, et le second dispositif transférant des données vers l'émetteur-récepteur lorsque des données sont disponibles dans le second dispositif, et en réponse au signal de requête provenant de l'émetteur-récepteur.
